# EUROPEAN PATENT APPLICATION

(11) **EP 2 275 657 A1**
(43) Date of publication of application: **19.01.2011**
(21) Application number: 09724482.6
(22) Date of filing: 09.02.2009
(51) Int. Cl.: F02D 17/02, F01N 3/02, F01N 3/08, F01N 3/20, F01N 3/24, F01N 3/28, F02D 41/06, F02D 41/38, F02D 43/00, F02D 45/00

(54) **ENGINE**

(30) Priority: 24.03.2008 JP 2008076436
(71) Applicant: Yanmar Co., Ltd., Osaka-shi, Osaka 530-0013 (JP)
(72) Inventor: ASAI, Gou, Osaka-shi Osaka 530-0013 (JP)
(74) Representative: Dieckhoff, Beate
(86) International application number: PCT/JP2009/052141
(87) International publication number: WO 2009/119165

(57) **Abstract**

Provided is an engine capable of activating a catalyst in an exhaust purifying apparatus during low-temperature ignition. The engine (101) comprises a main engine body provided with a plurality of cylinders (6a-6f), an exhaust purifying apparatus comprising an oxidation catalyst (31) provided to a fuel injection apparatus (14) for injecting fuel into the cylinders (6a-6f) and to the main engine body exhaust path, and a controller (50) for adjusting the fuel injection amount and fuel injection timing by the fuel injection apparatus (14), wherein during the low temperature ignition of the engine (101) that performs a cylinder cut-off operation for cutting off the injection of fuel into specified cylinders (6a-6c), the controller (50) injects fuel at least one time at or after the top dead center within a single combustion cycle of the operating cylinders (6d-6f) other than the specified cylinders.

## Description

### Technical Field

The present invention relates to an engine which performs cylinder cut-off operation during low-temperature ignition.

### Background Art

Conventionally, there is an well-known engine which performs cylinder cut-off operation. The cylinder cut-off operation is that fuel injection to a certain cylinder is stopped in a multi-cylinder engine. There is also a well-known engine which performs the cylinder cut-off operation during low-temperature ignition. The low-temperature ignition is engine ignition under the condition that the temperature of the outside air is low. For example, an engine disclosed in the Japanese Patent Laid Open Gazette 2001-059432 is constructed so as to perform the cylinder cut-off operation during low-temperature ignition. Even if combustion chamber temperature is low, fuel injection amount per one cylinder is large so as to raise the combustion temperature, thereby reducing cold smoke.

By the cylinder cut-off operation, exhaust gas temperature becomes higher than 200°C. However, activation temperature of continuous regeneration type diesel particulate filter, NOx reduction catalyst or the like disposed downstream of an oxidation catalyst is 250 to 300°C. Accordingly, the engine disclosed in the Japanese Patent Laid Open Gazette 2001-059432 is disadvantageous because it can hardly purify the exhaust gas during low-temperature ignition.

### Disclosure of Invention

### Problems to Be Solved by the Invention

The purpose of the present invention is to provide an engine capable of activating a catalyst in an exhaust purifying apparatus during low-temperature ignition.

### Means for Solving the Problems

An engine according to the present invention comprises an engine body having a plurality of cylinders, a fuel injection apparatus injecting fuel to the cylinders, an exhaust purifying apparatus provided in an exhaust passage of the engine body and having an oxidation catalyst, and a control means regulating fuel injection amount and fuel injection timing of the fuel injection apparatus. The control means performs cylinder cut-off operation that fuel injection to a certain cylinder is stopped during low-temperature ignition. When the cylinder cut-off operation during low-temperature ignition is performed, the control means performs post injection that is at least one fuel injection to any one of the operating cylinders other than the certain cylinder, to which the fuel injection has been stopped, at or after a top dead point within one combustion cycle of the operating cylinder.

Preferably, the engine according to the present invention further comprises an exhaust gas temperature detection means detecting an exhaust gas temperature and disposed upstream or downstream of the oxidation catalyst, and the control means regulates fuel injection amount of the post injection based on the exhaust gas temperature.

In the engine according to the present invention, preferably, the control means stops the post injection when the exhaust gas temperature is not less than a first predetermined temperature.

In the engine according to the present invention, preferably, the control means stops the cylinder cut-off operation when the exhaust gas temperature is not less than a second predetermined temperature which is higher than the first predetermined temperature.

Preferably, the engine according to the present invention further comprises a flow rate control means which intercepts or suppresses airflow into the cylinders, and the control means intercepts or suppresses airflow into the certain cylinder to which fuel injection has been stopped by the cylinder cut-off operation with the flow rate control means.

Preferably, the engine according to the present invention the control means intercepts or suppresses airflow into the certain cylinder to which fuel injection has been stopped by the cylinder cut-off operation with the flow rate control means based on the equivalent ratio.

### Effect of the Invention

According to the engine of the present invention, in the operating cylinder heated by the cylinder cut-off operation during the low-temperature ignition, fuel not contributing to main combustion is lightened with high temperature atmosphere by the post injection. Unburnt carbon hydride is guided by the oxidation catalyst so as to activate the oxidation catalyst and the exhaust gas temperature downstream of the oxidation catalyst is raised, whereby the catalyst of the exhaust purifying apparatus is activated.

### Brief Description of Drawings

[Fig. 1] It is a schematic drawing of entire construction of an engine according to the embodiment 1 of the present invention.
[Fig. 2] It is a flow chart of catalyst protection control according to the embodiment 2 of the present invention.
[Fig. 3] It is a schematic drawing of entire construction of an engine according to the embodiment 3 of the present invention.
[Fig. 4] It is a schematic drawing of entire construction of an engine according to the embodiment 4 of the present invention.
[Fig. 5] It is a time chart of restriction of a variable valve lift of a variable valve means.
[Fig. 6] It is a diagram of variable timing of the variable valve means.

### The Best Mode for Carrying out the Invention

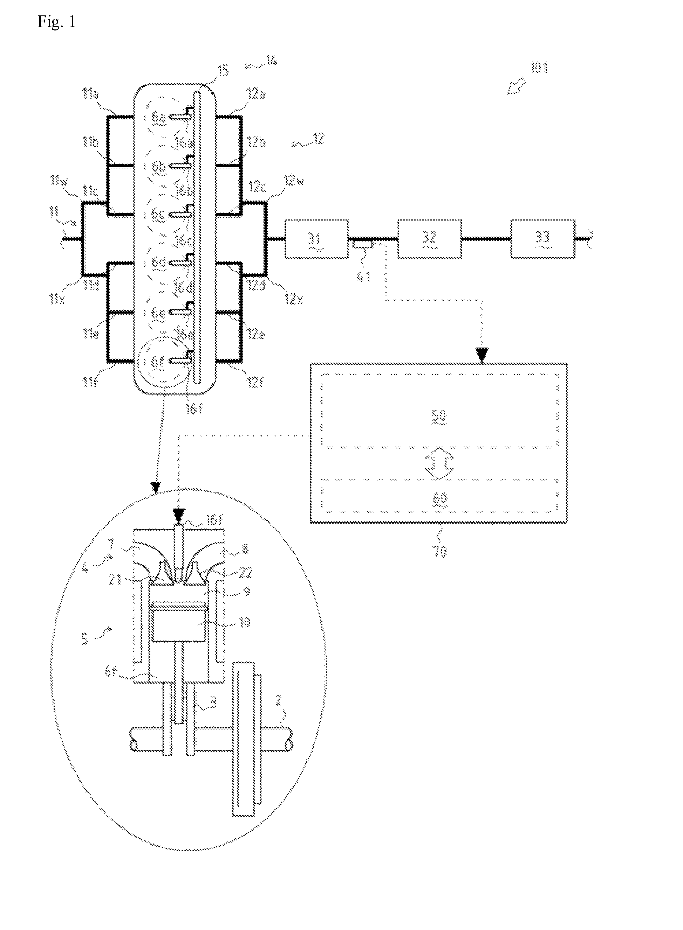

Firstly, explanation will be given on an engine 101 which is the embodiment 1 referring to Fig. 1. The engine 101 is a direct injection 6-cylindered diesel engine having six cylinders 6a, 6b, 6c, 6d, 6e and 6f. The engine 101 includes an engine body, an intake pipe 11, an exhaust passage, a fuel injection apparatus 14 and an ECU (Engine Control Unit) 70.

The intake pipe 11 is branched at the downstream of an air cleaner to an intake pipe 11w and an intake pipe 11x. The intake pipe 11w is branched to intake pipes 11a, 11b and 11c and the intake pipe 11x is branched to intake pipes 11d, 11e and 11f, and these intake pipes are connected to an intake manifold 7.

The exhaust passage is constructed by connecting an exhaust purifying apparatus with an exhaust pipe 12. The exhaust purifying apparatus has an oxidation catalyst 31, a diesel particulate filter (hereinafter, referred to as DPF) 32 and a urea SCR device 33 as a NOx reduction catalyst in series from an exhaust manifold 8 side.

During low-temperature ignition, the oxidation catalyst 31 promotes oxidation reaction of fuel and raises exhaust gas temperature so as to warm the DPF 32 and the urea SCR device 33 disposed downstream. The low-temperature ignition is engine ignition under the condition that the temperature of the outside air is low. The DPF 32 removes particle matters (PM) in the exhaust gas. The urea SCR device 33 supplies urea from the outside, exchanges it into ammonia and make the ammonia react with NOx in the exhaust gas so as to exchange the NOx into nitrogen.

Exhaust pipes 12a, 12b and 12c connected to the exhaust manifold 8 are concentrated to exhaust pipe 12w, exhaust pipes 12d, 12e and 12f are concentrated to exhaust pipe 12x, and then the exhaust pipe 12w and the exhaust pipe 12x are concentrated. An exhaust gas temperature sensor 41 as an exhaust gas temperature detection means is provided between the oxidation catalyst 31 and the DPF 32.

The engine body has a cylinder head 4 and a cylinder block 5. The cylinder head 4 has the intake manifold 7 communicated with the intake pipe 11 and the exhaust manifold 8 communicated with the exhaust pipe 12. Each of the cylinders 6 has a combustion chamber 9 and a piston 10. The piston 10 reciprocally slides air-tightly on the inner peripheral surface of the cylinder forming the combustion chamber 9. A crankshaft 2 is connected through connecting rods 3 to the pistons 10 and is rotated by reciprocating movement of the pistons 10.

The fuel injection apparatus 14 has a supply pump (not shown), a common rail 15 and injectors 16. The common rail 15 is a high pressure vessel in which high pressure fuel is accumulated hydraulically by driving the supply pump. Each of the injectors 16 injects the high pressure fuel accumulated hydraulically by the common rail 15 to corresponding one of the combustion chambers 9.

The ECU 70 has a controller 50 as a control means and a storage means 60. The ECU 70 is connected to electromagnetic valves of the injectors 16a, 16b, 16c, 16d, 16e and 16f and the exhaust gas temperature sensor 41.

The controller 50 has a function of injecting fuel to the cylinders 6a, 6b, 6c, 6d, 6e and 6f by the injectors 16a, 16b, 16c, 16d, 16e and 16f with optimum timing and optimum pressure.

The controller 50 has a function of performing cylinder cut-off-post injection control. In the cut-off-post injection control, during the low-temperature ignition, post-injection is performed to the operating cylinders 6d, 6e and 6f under the cylinder cut-off operation. In the cut-off-post injection control, the post injection control is performed based on exhaust gas temperature T just after the oxidation catalyst 31 detected by the exhaust gas temperature sensor 41.

In the cylinder cut-off operation, fuel injection by the injectors 16a, 16b and 16c is stopped during the low-temperature ignition so as not to perform the combustion in the cylinders 6a, 6b and 6c. In the cylinder cut-off operation, the fuel injection amount to the operating cylinders 6d, 6e and 6f is increased in comparison with that in normal operation (to drive all the cylinders). Therefore, when the combustion chamber temperature is low, the combustion temperature can be raised. In this embodiment, hereinafter, the cylinder cut-off operation is defined so that the cylinders 6a, 6b and 6c are stopped.

In the post injection control, fuel injection is performed at least once after a top dead point of one combustion cycle at the timing not contributing to the combustion.

The exhaust gas temperature under the cylinder cut-off operation is higher than 200°C, but the activation temperature of the DPF, NOx reduction catalyst or the like disposed downstream of the oxidation catalyst is 250 to 300°C. It means that, in idling operation, the DPF, NOx reduction catalyst or the like hardly purifies the exhaust gas. However, in the embodiment 1, so-called post injection, that is, the fuel injection after the top dead point and not contributing to the combustion is performed for the operating cylinders in the cylinder cut-off operation so as to further raise the outlet temperature of the oxidation catalyst 31 in comparison with that in simple cylinder cut-off operation.

Explanation will be given on the above action in detail. As mentioned above, in the cylinder cut-off operation, the temperature in the combustion chambers 9 of the operating cylinders comes to a high level that cannot be realized by the normal operation. Fuel injected into the combustion chamber 9 at this state is lightened quickly and is mixed with the exhaust gas without adhering to the wall surface of the combustion chamber 9. "Lighten" means that carbon hydride is not burnt and is evaporated and thermal-decomposed. By the unburnt carbon hydride, the oxidation catalyst 31 is oxidized quickly, whereby the exhaust gas temperature can be raised to not less than 300°C.

According to the above, the oxidation catalyst 31 is activated just after the low-temperature ignition and the DPF 32 or the urea SCR device 33 is activated so that the exhaust gas can be purified early. The cylinder cut-off-post injection control is performed based on exhaust gas temperature T of the oxidation catalyst 31 so that the oxidation catalyst 31 can be activated surely.

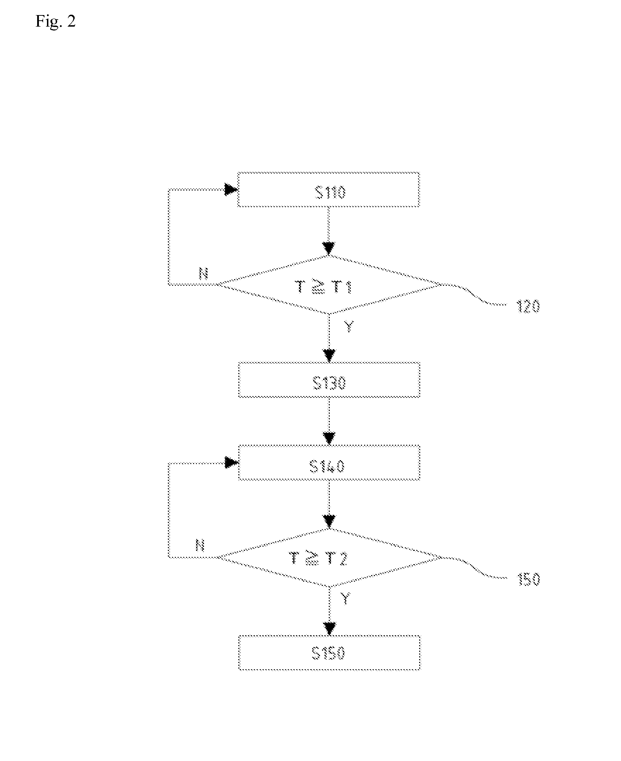

Explanation will be given on the embodiment 2 referring to Fig. 2. The controller 50 has a function of performing catalyst protection control in the above-mentioned cylinder cut-off-post injection control of the embodiment 1. In this case, predetermined temperatures T1 and T2 (T1<T2) are previously stored in the storage means 60.

The controller 50 performs the cylinder cut-off-post injection control (S110). Next, the controller 50 judges whether the exhaust gas temperature T is not less than the first predetermined temperature T1 or not (S120). At S120, when the exhaust gas temperature T is less than the first predetermined temperature T1, the cylinder cut-off-post injection control is continued (S110).

When the exhaust gas temperature T is not less than the first predetermined temperature T1, the controller 50 stops the post injection control. But, the cylinder cut-off operation is continued (S130). Next, the controller 50 waits for predetermined time (S140).
The controller 50 judges whether the exhaust gas temperature T is not less than the second predetermined temperature T2 or not (S150). At S150, when the exhaust gas temperature T is less than the first predetermined temperature T2, the controller 50 waits for predetermined time (S140).
When the exhaust gas temperature T is not less than the second predetermined temperature T2, the controller 50 stops the cylinder cut-off operation and performs the normal control (S160).

Accordingly, the oxidation catalyst 31 can be prevented from being damaged by high temperature. The quick return to the normal control can prevent abnormal rising of the exhaust gas temperature T.

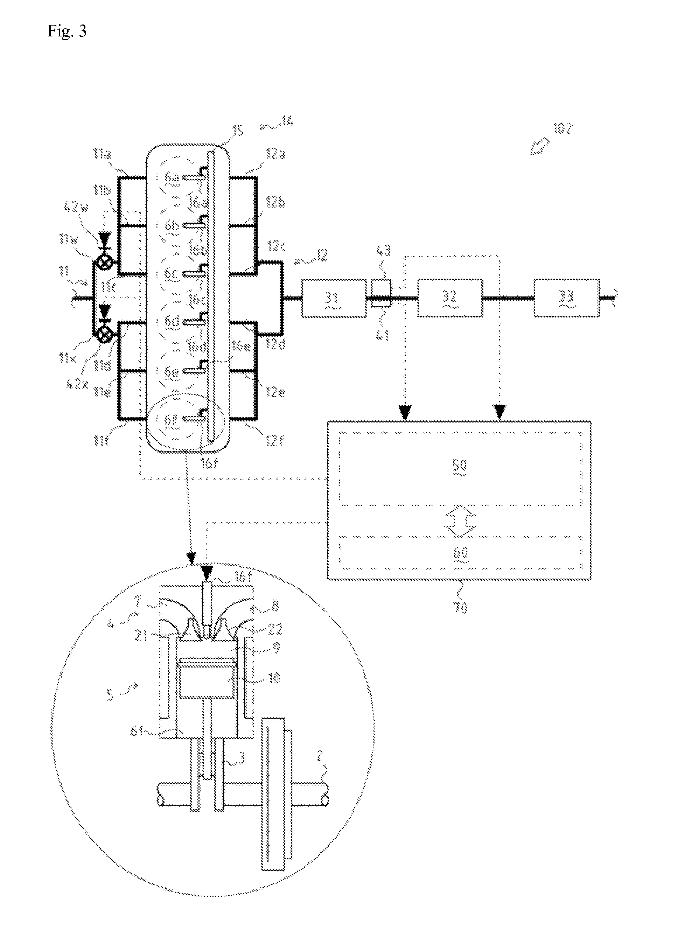

Explanation will be given on an engine 102 which is the embodiment 3 referring to Fig. 3. The engine 102 corresponds to the engine 101 of the embodiment 1 additionally provided with flow rate regulation valves 42w and 42x as a suction amount regulation means and an O₂ sensor 43 as an equivalent ratio detection means. Therefore, explanation about members other than these means is omitted. Similarly to the embodiment 1, the engine 102 performs the cylinder cut-off-post injection control.

The flow rate regulation valve 42w is provided in the intake pipe 11w. The intake pipe 11w is provided upstream of the branching intake pipes 11a, 11b and 11c. The flow rate regulation valve 42x is provided in the intake pipe 11x. The intake pipe 11x is provided upstream of the branching intake pipes 11d, 11e and 11f. Each of the flow rate regulation valves 42w and 42x has a function of regulating amount of air passing through corresponding one of the intake pipes 11w and 11x. The suction amount regulation means is not limited to the flow rate regulation valves 42w and 42x and may alternatively be a valve having only opening/closing mechanism.

The O₂ sensor 43 is provided between the oxidation catalyst 31 and the DPF 32. The O₂ sensor 43 has a function of detecting O₂ density in the exhaust gas. The controller 50 has a function of calculating the equivalent ratio from the O₂ density detected by the O₂ sensor 43. The equivalent ratio detection means is not limited to the O₂ sensor 43 and may alternatively be a sensor having an equal function.

The controller 50 has a function of performing the cylinder cut-off-post injection control. The controller 50 has a function of regulating the flow rate regulation valves 42.

When the cylinder cut-off-post injection control is performed, the cool outside air in the stopped cylinders 6a, 6b and 6c is directly guided to the exhaust pipes 12a, 12b and 12c, whereby the exhaust gas temperature at the inlet of the oxidation catalyst 31 is cooled suddenly.
Then, in the embodiment 3, sucked air flowing into the stopped cylinders 6a, 6b and 6c is reduced by the flow rate regulation valve 42w. Simultaneously, the amount of air passing through the stopped cylinders 6a, 6b and 6c is regulated by the flow rate regulation valve 42w so as to supply enough air amount for the reaction of the oxidation catalyst 31.

According to the construction, the exhaust gas temperature can be raised higher than the level obtained by the cylinder cut-off-post injection control. In other words, in the cylinder cut-off-post injection control, the post injection amount can be reduced for the raise of the exhaust gas temperature by suppression of air inflow. Accordingly, fuel consumption can be reduced. Since air flowing into the stopped cylinders is intercepted or suppressed based on the equivalent ratio, the post injection amount can be optimized so as to reduce the fuel consumption.

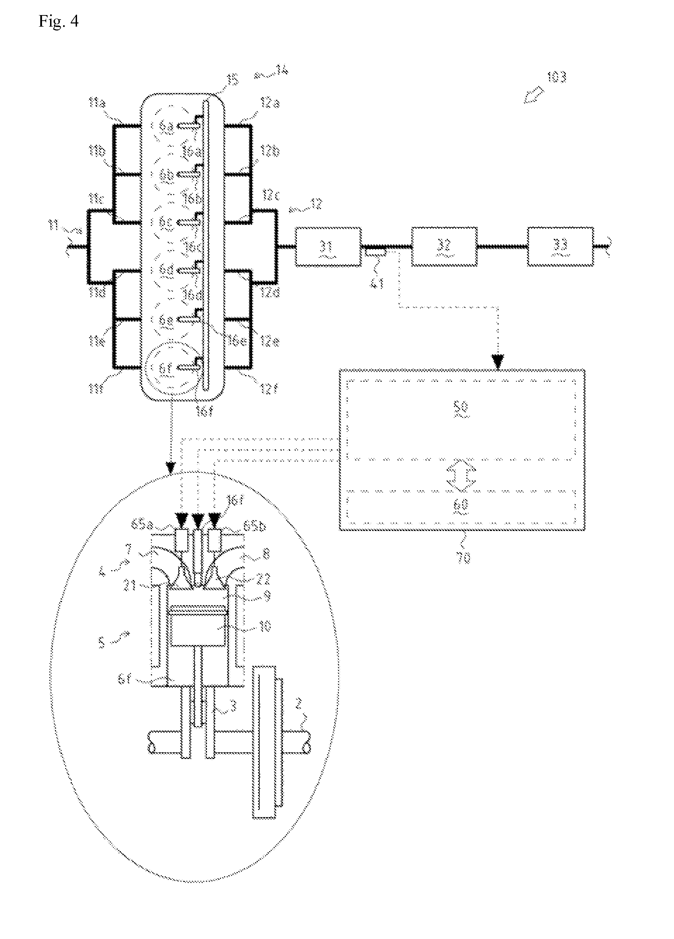

Explanation will be given on an engine 103 which is the embodiment 4 referring to Fig. 4. The engine 103 corresponds to the engine 101 of the embodiment 1 additionally provided with variable valve devices 65. Therefore, explanation about members other than the variable valve devices 65 is omitted. Similarly to the embodiment 1, the engine 103 performs the cylinder cut-off-post injection control.

The variable valve devices 65a and 65b change lift amount or opening/closing timing of an intake valve 21 and an exhaust valve 22. In the embodiment 4, usual variable valve devices serve as them.

The controller 50 has a function of performing the cylinder cut-off-post injection control. The controller 50 has a function of performing variable valve control with the variable valve devices 65a and 65b. Explanation will be given on two kinds of variable valve control as follows.

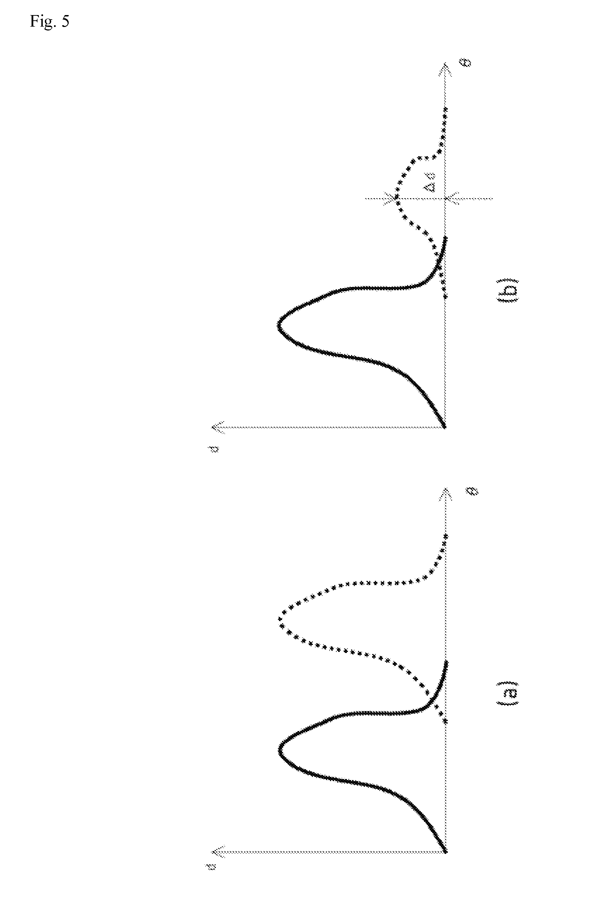

Explanation will be given on variable valve lift amount change control which is one kind of the variable valve control referring to Fig. 5. Fig. 5 (a) is a diagram of a normal valve lift amount d for comparing with this control, and Fig. 5 (b) is a diagram of a valve lift amount d in this control. In each of Figs. 5 (a) and (b), the axis of abscissas indicates a crank angle θ in one combustion cycle. A broken line at the right side of the graph indicates the lift amount d of the intake valve 21, and a solid line at the left side of the graph indicates the lift amount d of the exhaust valve 22. As shown in Fig. 5, in this control, the lift amount of the intake valve 21 for each of the stopped cylinders 6a, 6b and 6c is limited to Ad.

According to the construction, the exhaust gas temperature can be raised higher than the level obtained by the cylinder cut-off-post injection control. In the cylinder cut-off-post injection control, the post injection amount can be reduced for the raise of the exhaust gas temperature by suppression of air inflow. Accordingly, fuel consumption can be reduced. Since air flowing into the stopped cylinders is intercepted or suppressed based on the equivalent ratio, the post injection amount can be optimized so as to reduce the fuel consumption. Instead of limiting the lift amount of the intake valve 21, the lift amount of the exhaust valve 22 may alternatively be limited so as to obtain similar effect.

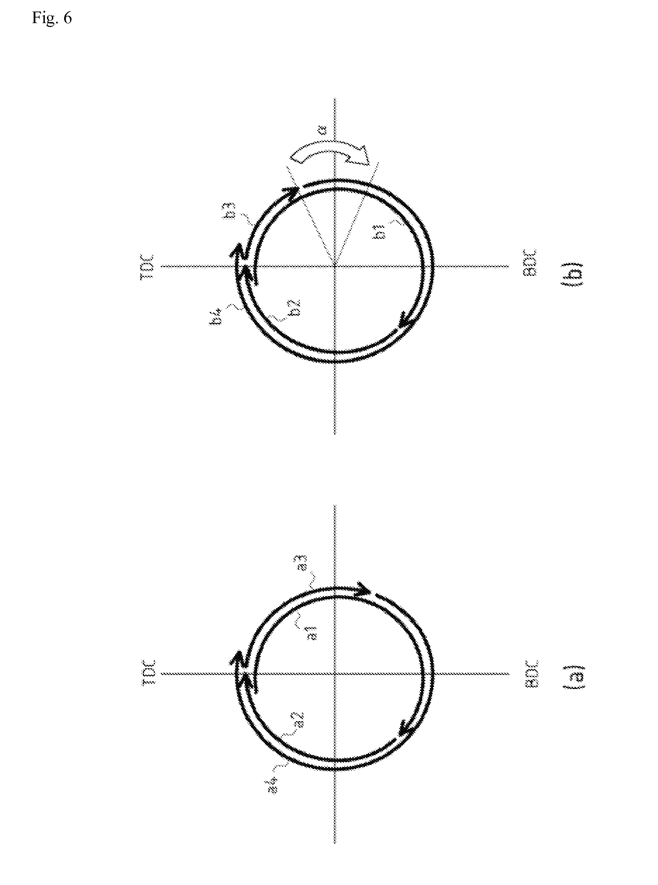

Explanation will be given on variable timing change control which is another kind of the variable valve control referring to Fig. 6. Fig. 6 (a) is a diagram of normal valve timing (intake stroke a1, compression stroke a2, combustion stroke a3 and exhaust stroke a4) to be compared with the present control, and Fig. 6 (b) is a diagram of valve timing (intake stroke b1, compression stroke b2, combustion stroke b3 and exhaust stroke b4) in the present control. As shown in Fig. 6, in the present control, the opening timing of the exhaust valve 22 for each of the stopped cylinders 6a, 6b and 6c is advanced by an angle α.
According to the construction, the air in each of the stopped cylinders 6a, 6b and 6c is compressed and the air with high temperature is discharged. Accordingly, the exhaust temperature of each of the stopped cylinders 6a, 6b and 6c can be made higher in comparison with the level obtained by the normal valve timing.

### Industrial Applicability

The present invention is adaptable to an engine which performs cylinder cut-off operation during low-temperature ignition.

## Claims

1. An engine comprising:
an engine body having a plurality of cylinders;
a fuel injection apparatus injecting fuel to the cylinders;
an exhaust purifying apparatus provided in an exhaust passage of the engine body and having an oxidation catalyst; and
a control means regulating fuel injection amount and fuel injection timing of the fuel injection apparatus,
wherein the control means performs cylinder cut-off operation that fuel injection to a certain cylinder is stopped during low-temperature ignition,
**characterized in that**:
when the cylinder cut-off operation during low-temperature ignition is performed, the control means performs post injection that is at least one fuel injection to any one of the operating cylinders other than the certain cylinder, to which the fuel injection has been stopped, at or after a top dead point within one combustion cycle of the operating cylinder.

2. The engine according to claim 1, further comprising:
an exhaust gas temperature detection means detecting an exhaust gas temperature and disposed upstream or downstream of the oxidation catalyst,
wherein the control means regulates fuel injection amount of the post injection based on the exhaust gas temperature.

3. The engine according to claim 2, wherein the control means stops the post injection when the exhaust gas temperature is not less than a first predetermined temperature.

4. The engine according to claim 3, wherein the control means stops the cylinder cut-off operation when the exhaust gas temperature is not less than a second predetermined temperature which is higher than the first predetermined temperature.

5. The engine according to one of claims 1 to 4, further comprising:
a flow rate control means which intercepts or suppresses airflow into the cylinders,
wherein the control means intercepts or suppresses airflow into the certain cylinder to which fuel injection has been stopped by the cylinder cut-off operation with the flow rate control means.

6. The engine according to claim 5, further comprising:
an equivalent ratio detection means detecting an equivalent ratio of the exhaust passage,
wherein the control means intercepts or suppresses airflow into the certain cylinder to which fuel injection has been stopped by the cylinder cut-off operation with the flow rate control means based on the equivalent ratio.
